# FASCICULE DE BREVET EUROPEEN

(11) **EP 3 732 776 B1**
(45) Date de publication et mention de la délivrance du brevet: **06.04.2022**
(21) Numéro de dépôt: 18845303.9
(22) Date de dépôt: 21.12.2018
(51) Int. Cl.: H02K 21/16, H02K 1/27, H02K 7/116, H02K 7/14

(54) **MOTOREDUCTEUR A ENCOMBREMENT REDUIT**
KOMPAKTGETRIEBEMOTOR
COMPACT GEAR MOTOR

(30) Priorité: 26.12.2017 FR 1763229
(43) Date de publication de la demande: 04.11.2020
(73) Titulaire: Bontaz Centre R&D, 74460 Marnaz (FR)
(72) Inventeur: TAUPEAU, Anthony, Raymond, Arthur, 74410 Saint-Jorioz (FR); BACLE, Timothée, 1004 Lausanne (CH); MAKKI, Ali, 33800 Bordeaux (FR)
(74) Mandataire: Brevalex
(86) Numéro de dépôt international: PCT/FR2018/053531
(87) Numéro de publication internationale: WO 2019/129984

(56) Documents cités:
- EP-A1- 0 588 769
- WO-A1-2013/189649
- FR-A1- 2 341 221
- JP-A- H11 332 176
- JP-A- 2001 095 222
- JP-A- 2016 056 892
- JP-U- S5 834 558
- US-A1- 2012 074 820

## Description

La présente invention se rapporte à un motoréducteur comportant un moteur sans balai et un réducteur, offrant un encombrement réduit.

Dans l'industrie automobile, on utilise des vannes pilotées en tout ou rien ou proportionnellement par un moteur électrique. Ces vannes servent par exemple gérer l'alimentation en fluide de refroidissement, en carburant, en huile...

On cherche à utiliser des moteurs électriques présentant un encombrement réduit pour pouvoir être intégrés dans les véhicules automobiles.

Par ailleurs, on cherche à réaliser des moteurs électriques présentant une vitesse de rotation en sortie suffisante et un couple suffisant.

Il est possible d'utiliser un moteur électrique offrant une vitesse de rotation en sortie importante et un faible couple connecté à un réducteur en sortie du moteur électrique, ce qui permet de réduire la vitesse en sortie de l'ensemble et d'augmenter le couple.

Or la mise en œuvre d'un réducteur peut augmenter l'encombrement de manière sensible.

Le document US 2012/074820 A1 divulgue un motoréducteur comportant un train épicycloïdal.

### EXPOSÉ DE L'INVENTION

C'est par conséquent un but de la présente invention d'offrir un motoréducteur selon la revendication 1 présentant un encombrement réduit tout en étant capable de générer un couple en sortie suffisant.

Le but énoncé ci-dessus est atteint par un motoréducteur comportant un moteur sans balai et un réducteur planétaire intégré dans le moteur, de sorte que l'encombrement du motoréducteur est défini par l'encombrement du rotor et du stator du moteur électrique.

Le réducteur planétaire comporte une couronne dentée contenue dans le rotor, la couronne dentée contenant l'ensemble des éléments du réducteur planétaire.

Le motoréducteur offre un niveau d'intégration élevé.

Les éléments du réducteur et du moteur électrique sont de préférence disposés de sorte que l'axe du moteur électrique et aligné avec l'axe de sortie du motoréducteur.

De manière très avantageuse, le motoréducteur comporte un axe de centrage unique qui assure le centrage des éléments du réducteur par rapport au rotor, et autour duquel tournent le rotor et les éléments du réducteur. Il limite l'usure du réducteur. En outre, il facilite l'assemblage. Il permet également, dans le cas d'éléments de réducteur en matériau plastique, d'assurer un jeu suffisant entre les éléments pour qu'ils s'engrènent correctement.

De plus, la mise en œuvre d'un axe unique permet de réduire sensiblement les pertes, car les éléments mobiles en rotation du réducteur tournent autour de cet axe de faible diamètre et de grande longueur, afin d'avoir un rapport diamètre / longueur qui assure un bon guidage...

De manière avantageuse, tout ou partie des pièces du réducteur sont en matériau plastique. La couronne dentée extérieure peut être avantageusement réalisée d'un seul tenant avec une partie du boîtier du motoréducteur.

Le moteur électrique est de préférence un moteur triphasé et le stator comporte au moins trois bobines.

La puissance de sortie mécanique du motoréducteur et son rendement peuvent être fixé en fonction du périmètre du rotor, et le couple atteint est déterminé en fonction du rapport de réduction.

La présente invention a alors pour objet un motoréducteur comportant un moteur électrique sans balai, un réducteur planétaire et un arbre de sortie solidaire en rotation du réducteur planétaire, ledit moteur électrique comportant un stator, un rotor disposé dans le stator, ledit rotor étant apte à être mis en rotation autour d'un axe longitudinal par le rotor, ledit réducteur étant logé au moins en partie dans le rotor, ledit réducteur comportant au moins un premier planétaire, au moins un premier satellite engrenant ledit premier planétaire, et une couronne dentée extérieure disposée dans le rotor et engrené par le premier satellite, le premier planétaire et le premier satellite étant entrainés en rotation par le rotor. Le motoréducteur comporte un axe de centrage s'étendant selon l'axe longitudinal et traversant le stator, le rotor, et assurant le guidage en rotation du rotor, du premier planétaire et du premier satellite et de l'arbre de sortie.

Dans un exemple avantage, le motoréducteur comporte un carter dans lequel sont logés le moteur électrique et le réducteur planétaire, ledit carter comportant une première partie et une seconde partie coopérant l'une avec l'autre de sorte à enfermer le moteur électrique et le réducteur planétaire, la seconde partie comportant un passage traversé par l'arbre de sortie, et la première partie comportant un logement recevant une extrémité longitudinale de l'axe de centrage, l'autre extrémité longitudinale de l'axe de centrage étant reçue dans un logement formé dans l'arbre de sortie.

Par exemple, la couronne dentée extérieure est solidaire de la seconde partie. De maniéré avantageuse, la couronne dentée extérieure est d'un seul tenant avec la seconde partie.

Par exemple, le premier planétaire est solidaire en rotation d'un moyeu entraîné directement par le rotor, et le premier satellite est porté par une platine porte-satellite logée dans le rotor.

Dans un exemple particulier, le réducteur comporte un deuxième planétaire solidaire en rotation de la première platine porte-satellite et au moins un deuxième satellite relié mécaniquement à l'arbre de sortie.

Le réducteur peut comporter une deuxième platine porte-satellite portant le deuxième satellite et de laquelle est solidaire en rotation l'arbre de sortie.

De manière avantageuse, l'axe de centrage traverse également la première platine porte-satellite, ladite première platine porte-satellite étant libre en rotation par rapport à l'axe de centrage.

Le réducteur peut comporte trois premiers satellites et trois deuxièmes satellites.

Avantageusement la première platine porte-satellite et/ou la deuxième platine porte-satellite, le premier planétaire et/ou le deuxième planétaire et/ou le premier satellite et/ou le deuxième satellite et/ou l'arbre de sortie et/ou le carter est ou sont en matériau plastique.

Dee manière avantageuse, le moteur électrique présente un rapport πD/Np compris entre 4mm et 7,3 mm, D étant le diamètre extérieur de l'aimant du rotor et Np, le nombre de pôles du rotor et Np est supérieur à 10.

Le motoréducteur comporte avantageusement un capteur de position angulaire de l'arbre de sortie comprenant au moins un aimant solidaire en rotation de l'arbre de sortie et des moyens pour détecter le champ magnétique dudit aimant.

La présente invention a également pour objet un système comportant au moins une vanne proportionnelle ou tout ou rien et un motoréducteur selon l'invention pilotant ladite vanne.

La présente invention a également pour objet un véhicule automobile comportant au moins un motoréducteur selon l'invention et/ou au moins un système selon l'invention.

### BRÈVE DESCRIPTION DES DESSINS

La présente invention sera mieux comprise sur la base de la description qui va suivre et des dessins en annexe sur lesquels:
- la figure 1 est une vue de côté du motoréducteur selon un exemple de réalisation de la présente invention, le carter étant représenté en transparence,
- la figure 2 est une vue en perspective du motoréducteur de la figure 1, le carter étant partiellement représenté et représenté en transparence,
- la figure 3A est une vue en éclatée du motoréducteur de la figure 1,
- la figure 3B est une vue en coupe longitudinale d'une variante avantageuse du motoréducteur de la figure 1,
- la figure 4A est une vue du motoréducteur d'entrainement de la figure 1 à travers le couvercle,
- la figure 4B est une vue de dessus du stator et du rotor montés sur la carte électronique.

### EPOSÉ DÉTAILLÉ DE MODES DE RÉALISATION PARTICULIERS

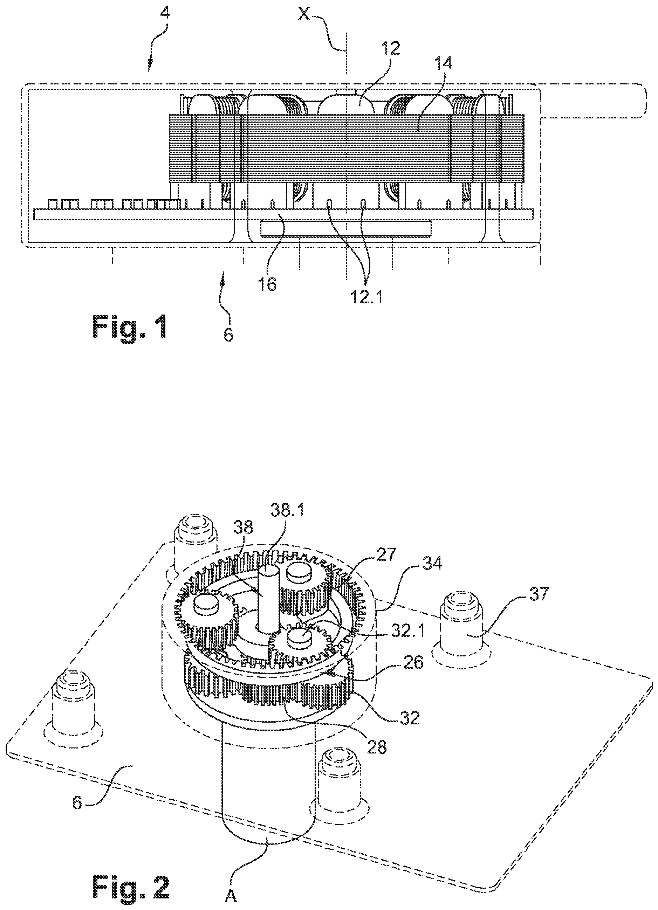

Sur les figures 1 et 2, on peut voir un exemple du motoréducteur selon l'invention vu de l'extérieur.

Le motoréducteur s'étend le long d'un axe longitudinal X. il comporte un carter 2 dans lequel sont logés le moteur électrique M et le réducteur planétaire R. Le carter 2 protège le moteur et le réducteur de l'environnement extérieur. Le motoréducteur comporte à une extrémité longitudinale un arbre de sortie A faisant saillie du carter 2 par une ouverture 3.

Dans la suite de la description, l'extrémité longitudinale du motoréducteur comportant l'arbre de sortie A sera désignée « extrémité aval », l'autre extrémité longitudinale du motoréducteur sera désignée « extrémité amont ». L'orientation des différents éléments du motoréducteur par rapport à ces extrémités pourra être repérée par le terme « amont » ou « aval ».

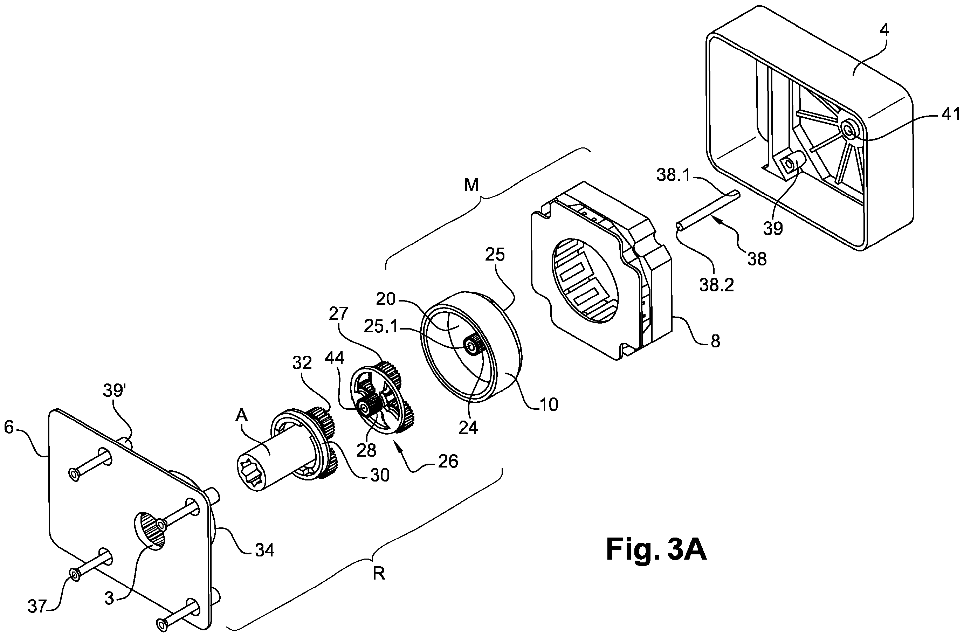

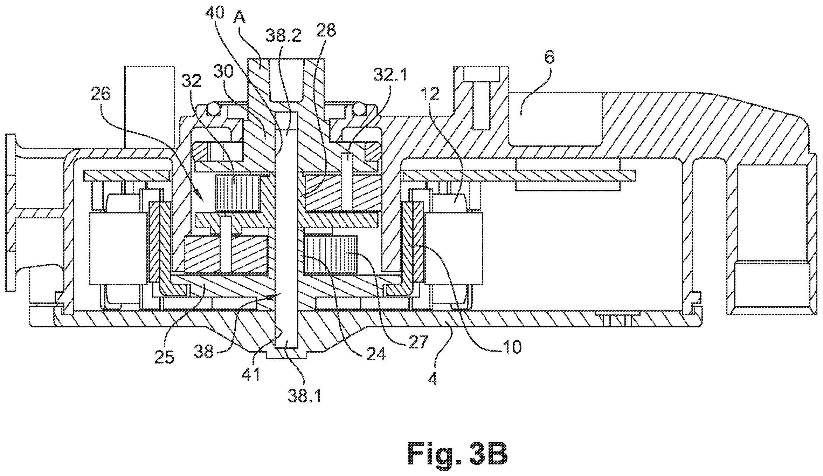

Sur la figure 3A, on peut voir une vue en éclatée du motoréducteur, le long de l'axe X et sur la figure 3B, on peut voir une vue en coupe longitudinale d'une variante du motoréducteur de la figure 1, très proche du motoréducteur de la figure 1.

Le carter 2 comporte un boîtier 4 et un couvercle 6 fermant le boîtier.

Le moteur électrique est un moteur sans balai ou brushless en terminologie anglo-saxonne, comporte un stator 8, un rotor 10 disposé dans le stator 8 et une carte électronique 16.

Le stator 8 comporte des bobines 12 logées dans un empilement de tôles 14. Le stator a une structure bien connu de l'homme du métier. De préférence, le moteur électrique est un moteur triphasé comportant un nombre de bobines 12 multiple de trois réparties angulairement de manière régulière autour de l'axe X.

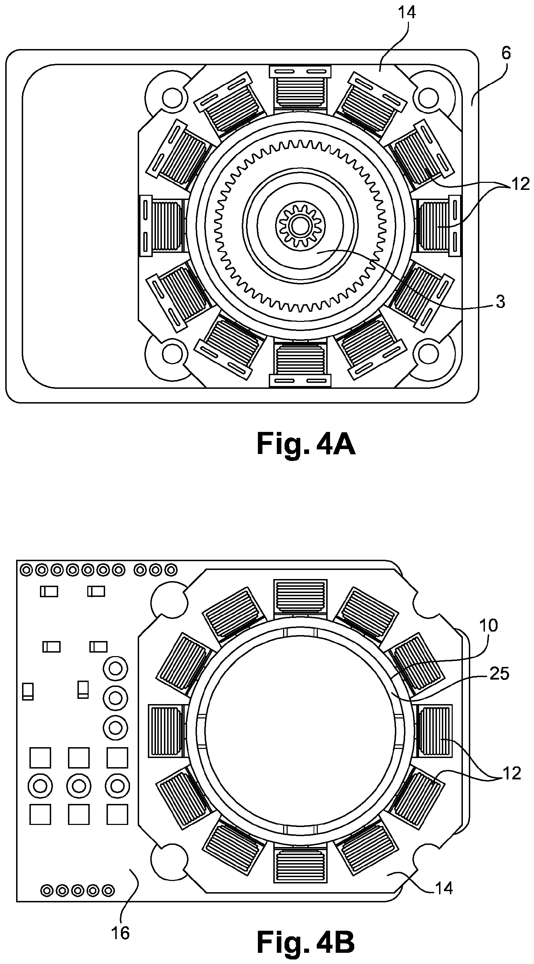

Sur la figure 4A on peut voir le stator 8 vu de dessus. Sur la figure 4B, le stator 8 est monté sur la carte électronique 16 sur laquelle les broches 12.1 des bobines sont connectées, par exemple par soudage ou par serrage mécanique (press-fit en terminologie anglo-saxonne), et qui sert à piloter le rotor.

Le rotor 10 est monté à l'intérieur du stator. Il présente la forme d'un manchon et est destiné à tourner dans le stator autour de l'axe X. le rotor est formé d'un aimant permanent comportant plusieurs paires de pôles, par exemple de 4 à 40 paires de pôles. Le rotor 10 est entraîné en rotation autour de l'axe X par le champ magnétique généré par le courant traversant le bobinage du stator 8.

Le réducteur R comporte un moyeu 20 solidaire en rotation du rotor 8 autour de l'axe X. Dans l'exemple représenté, le moyeu a la forme d'un disque muni de quatre oreilles 22 en saillie radialement vers l'extérieur et coopérant avec des encoches 23 formées dans une culasse 25 du rotor, fixée à une extrémité axiale amont du rotor 10, assurant la solidarisation en rotation du rotor 10 et du moyeu 20. La solidarisation en rotation du rotor et du moyeu peut se faire par d'autres moyens, par exemple par sertissage mécanique de la culasse 25 avec le moyeu 20, ou par solidarisation du moyeu 20 directement en surmoulage autour de la culasse 25.

Le moyeu 20 comporte sur une face aval opposée à celle orientée vers le boîtier un pignon 24 formant un premier planétaire du réducteur R. Le premier planétaire 24 est donc entraîné en rotation directement par le moyeu 20.

Le réducteur comporte également une première platine porte-satellite 26 et trois premiers satellites 27 montés mobiles en rotation sur une face amont de la platine porte-satellite 26 autour d'axes parallèles à l'axe X. Les premiers satellites 27 engrènent le premier planétaire 24. Un deuxième planétaire 28 est solidaire en rotation de la première platine porte-satellite 26 et est disposé sur l'axe X sur une face aval de la première platine porte-satellite 26, opposée à la face amont portant les premiers satellites 27.

Le réducteur comporte une deuxième platine porte-satellite 30 et trois deuxièmes satellites 32 montés mobiles en rotation sur une face amont de la deuxième platine porte-satellite 30 autour d'axes 32.1 (figure 2) parallèles à l'axe X. Le deuxième planétaire 28 engrène les deuxièmes satellites 32.

De manière avantageuse, les satellites 27 et 32 sont identiques ce qui permet de simplifier la fabrication du motoréducteur.

L'arbre de sortie A du motoréducteur est solidaire en rotation de la deuxième platine porte-satellite 30 et fait saillie d'une face aval de la deuxième platine 30 opposée à la face amont portant les deuxièmes satellites 32. Dans l'exemple représenté, l'arbre de sortie A comporte à son extrémité aval une empreinte en creux en étoile 33 pour une connexion à un motoréducteur extérieur à entraîner. L'extrémité aval de l'arbre de sortie peut avoir d'autres formes suivant le type de connexion requise. L'arbre de sortie A peut être guidé en rotation par le contour de l'ouverture 3 formée dans le couvercle.

Le réducteur comporte également un couronne dentée extérieure 34 d'axe X, disposée à l'intérieur du rotor 10 et à l'extérieur des premiers 27 et deuxièmes 32 satellites, de sorte que les satellites 27 et 32 engrènent la couronne dentée 34. Tous les éléments du réducteur sont donc disposés à l'intérieur de la couronne dentée 34. La couronne dentée 34 est fixe par rapport au carter.

De manière très avantageuse, la couronne dentée 34 est réalisée d'un seul tenant avec le couvercle, par exemple par moulage. En variante, la couronne dentée 34 est fixée sur le couvercle 6 par collage, par des vis...

De manière très avantageuse, un axe de centrage 38 unique traverse le réducteur R et le moteur M et assure le centrage des différents éléments du réducteur et du rotor 10 par rapport au stator 8. La culasse 25 comporte un passage central 25.1 traversant le premier planétaire permettant le passage de l'axe de centrage 38. L'entrefer entre le rotor 10 et le stator 8 est ainsi fixé sans utiliser de palier. La suppression des paliers contribue à l'allongement de la durée de vie du motoréducteur. En outre, la réalisation du motoréducteur est simplifiée, et sa masse est réduite.

L'axe de centrage 38 est maintenu axialement et transversalement dans le motoréducteur. Pour cela, le fond intérieur du boitier comporte un logement 41 recevant une extrémité longitudinale 38.1 de l'axe 38, et la deuxième platine porte-satellite 30 comporte également un logement 41 entre les deuxièmes satellites sur sa face amont recevant l'autre extrémité de l'axe 38. La deuxième platine porte-satellite 30 étant guidée par le contour de l'ouverture dans le couvercle 6 via l'arbre de sortie A, l'autre extrémité de l'axe de centrage 38 est également maintenue axialement et transversalement. L'axe 38 est monté fixe dans le boîtier 4, par exemple l'extrémité 38.1 est montée serrée dans le logement 41 du boîtier 4.

En outre, le premier planétaire 24 et le deuxième planétaire 28 comportent en leur centre un passage axial 42, 44 respectivement, pour le passage de l'axe de centrage 38. Les diamètres des logements 40, 41 et des logements 42, 44 sont ajustés au diamètre de l'axe 38, afin d'assurer un maintien transversal de l'axe de centrage 34 et un bon guidage en rotation des différents éléments du réducteur.

L'axe 38 assure le guidage, le recentrage de tous les éléments mobiles et assure également la fonction de palier de glissement pour les éléments mobiles.

L'axe de centrage 38 est avantageusement en métal, par exemple en acier, avantageusement en acier inoxydable pour présenter une rigidité suffisante. Le diamètre de l'arbre peut être fixé précisément par une opération de rectification Avantageusement l'axe 38 est réalisé avec une grande précision, par exemple par usinage. Son diamètre présente avantageusement une tolérance maximale de de 20 µm et une cylindricité de 5 µm.

Les jeux entre l'axe 38 qui est fixe dans le carter et les éléments mobiles sont avantageusement compris entre 20 µm et 60 µm.

Le boîtier et le couvercle sont disposés de sorte que les logements 40 et 41 assurent une coaxialité entre l'axe de centrage 38 et la couronne dentée 34.

La mise en œuvre de l'axe de centrage fixe et la précision de positionnement, qui peut être obtenue lors de la réalisation du boîtier et du couvercle qui intègre la couronne 34 et lors de leur assemblage, permet très avantageusement de ne pas utiliser de roulement à billes entre l'arbre de centrage et les éléments mobiles en rotation autour de lui.

La mise en œuvre de cet axe de centrage 38 permet de limiter l'usure du réducteur. En outre, il facilite l'assemblage. Il permet également, dans le cas d'éléments de réducteur en matériau plastique, d'assurer un jeu suffisant entre les éléments pour qu'ils s'engrènent correctement.

De manière avantageuse, les axes des satellites sur les platines porte-satellite, sont réalisés en acier, par exemple en acier inoxydable, pour améliorer encore davantage le guidage et éviter l'usure des dentures du réducteur planétaire (figure 3B).

De plus, la mise en œuvre d'un axe unique permet de réduire sensiblement les pertes car les éléments mobiles en rotation du réducteur tournent autour de cet axe de faible diamètre.

Il sera compris qu'il est possible de modifier l'ordre des éléments du réducteur. En effet, on peut prévoir que le moyeu forme un porte-satellite, qui engrène un planétaire porté par une platine porte-satellite, entrainant alors des deuxièmes satellites qui engrènent un deuxième planétaire solidaire en rotation de l'arbre de sortie. Dans cette configuration, la première platine porte-satellite 26 peut être retournée, la face amont formant la face aval.

De manière avantageuse, le couvercle et la couronne dentée 34 sont réalisés en un matériau plastique.

Le couvercle 6 est fixé sur le boîtier par exemple par des vis 37. Tout autre moyen de solidarisation est envisageable, voire un moyen définitif. Lorsque les formes sont adaptées, le couvercle et le boîtier peuvent être vissés l'un à l'autre, un joint est alors prévu pour protéger l'intérieur du motoréducteur des agressions extérieures.

De manière avantageuse, le couvercle et le boîtier sont solidarisés par soudage, par exemple ultra-son rendant directement la carte étanche.

De manière très avantageuse, afin d'éviter un augmentation de la pression dans le motoréducteur du fait de l'échauffement dû au fonctionnement du motoréducteur, des moyens (non représentés) sont prévus pour décharger la surpression. Par exemple, il s'agit d'une ouverture, par exemple sous forme de grille, dans le couvercle ou le boîtier, obturée par une membrane perméable à l'air et empêchant le liquide d'entrer dans le motoréducteur, par exemple en Goretex^{®}. La membrane est par exemple soudée par ultra-son.

Avantageusement, le contour extérieur du stator 8 est conformé pour coopérer avec les passages 39 de vis formés dans le fond du boîtier 4 et dans le couvercle 6, ce qui assure un maintien en position du stator 8 dans le carter. Le contour extérieur du stator 8 comporte des encoches de dimensions adaptées à loger les passages 38 de vis. D'autres moyens de maintien sont envisageables, par exemple le stator peut être fixé sur le couvercle ou le boîtier.

De manière très avantageuse, tout ou partie des pièces du réducteur sont en matériau plastique, par moulage et/ou par usinage. La première platine porte-satellite 26 et le deuxième planétaire 28 peuvent être réalisés d'un seul tenant par moulage. La deuxième platine porte-satellite 30 et l'arbre A peuvent également être réalisés d'un seul tenant par moulage.

De préférence les planétaires 24, 28, les satellites 27, 32 et la couronne dentée extérieure 34 sont en matériau plastique. Les axes autour desquels les satellites sont montés mobiles en rotation sont également avantageusement réalisés par moulage d'un seul tenant avec les platines porte-satellite.

Comme expliqué ci-dessus, de manière très avantageuse, les axes des satellites peuvent être en acier, par exemple en acier inoxydable ou en tout matériau offrant une bonne rigidité, par exemple assemblés au porte-satellite par surmoulage ou par montage serré.

Les satellites sont par exemple encliquetés sur leur arbre.

Grâce à l'invention, la hauteur du réducteur est sensiblement égale à celle du moteur électrique. Ainsi l'encombrement à la fois axial et transversal du motoréducteur est sensiblement réduit.

Il sera compris que le réducteur peut comporter plus au moins de trois satellites 27 et plus au moins de trois satellites 32, par exemple 1, 3, 4, 5..., le nombre d'étages étant choisi en fonction de l'équilibre cinématique souhaité et des vitesses mises en jeu

Le boîtier 4 et le couvercle 6 peuvent être intervertis, la couronne dentée 34 étant lors solidaire du fond du boîtier 4.

En variante, le carter comporte deux parties sensiblement symétriques, comportant un fond et une paroi latérale dont la hauteur est sensiblement égale à la demi-hauteur totale du carter. Dans l'exemple représenté, l'axe du moteur et l'axe de sortie A sont alignés.

En variante, la couronne 34 peut comporter des diamètres intérieurs différents, pour les satellites 27 et 32 en fonction du rapport de réduction choisi, et/ou la couronne extérieure 34 peut comporter plusieurs parties superposées le long de l'axe X.

En variante également, les satellites 27 et/ou 32 peuvent être à double denture, une denture engrenée par le planétaire et une denture engrenant la couronne.

En outre, le réducteur peut ne comporter qu'un seul étage ou plus de deux étages en fonction du couple souhaité en sortie.

De manière avantageuse, le motoréducteur comporte un capteur de position angulaire de l'arbre de sortie A par exemple participant à l'établissement un diagnostic embarqué ou OBC (On Board Diagnostic en terminologie anglo-saxonne), permettant d'avoir une boucle de régulation de contrôle moteur réalisé par une unité de contrôle moteur, avantageusement intégré au motoréducteur. Par exemple, le capteur comporte un aimant, par exemple de 1 à 4 pôles intégrés dans l'arbre de sortie, avantageusement lors du moulage de l'arbre. Le passage de l'aimant est détecté par un élément sensible au champ magnétique de l'aimant, mont » par exemple sur le couvercle ou monté sur la carte électronique de pilotage du moteur. Dans l'exemple représenté, l'aimant est porté par la platine porte-satellite 30.

La puissance de sortie mécanique du motoréducteur et son rendement peuvent être fixés en fonction du périmètre du rotor, et le couple atteint est déterminé en fonction du rapport de réduction.

De manière très avantageuse le moteur a un arc polaire qui est défini comme le rapport πD/Np compris entre 4 mm et 7,3 mm, avec D le diamètre extérieur de l'aimant et Np le nombre de pôles de l'aimant, Np étant supérieur à 10.

L'invention permet de réaliser un motoréducteur de faible encombrement, par exemple grâce au réducteur des figures 1 à 3A, le motoréducteur peut être contenu dans une enveloppe de 60 mm de hauteur et de section 54mmx54 mm, 54 x 54 ce sont les dimensions du stator, en considérant un jeu, le carter présente une section de 60 mm x 60 mm ou 62 mm x 62 mm, et offrir un couple de sortie compris entre 0 N et 0,5 N, voire atteindre 4 N.m selon les conditions d'alimentation, en fonction du rapport de réduction, et une vitesse d'arbre de sortie entre 0 rpm et 30 rpm.

De plus le motoréducteur selon l'invention présente une durée de vie importante, d'une part grâce à la mise en œuvre d'un moteur sans balai, et d'autre part grâce à l'arbre de centrage qui limite l'usure des éléments du réducteur.

Le motoréducteur selon l'invention présente en outre l'avantage d'offrir un montage simplifié et également un démontage simplifié.

Par exemple, le stator 8 est monté autour de la couronne 34. Ensuite on assemble le réducteur en montant par exemple une extrémité de l'arbre de centrage dans le porte-satellite 30 et ensuite en assemblant le porte-satellite 26 portant les satellites 27 ; puis le rotor. Le boîtier est enfin mis en place et est solidarisé au couvercle 6 par les vis 37, et /ou par soudage par ultra son. L'extrémité 38.1 est insérée à force dans le logement 40 du boîtier 4.

Le motoréducteur selon l'invention est applicable pour entraîner tout type de dispositif, en particulier des dispositifs embarqués du fait du très faible encombrement du motoréducteur selon l'invention. Il est particulièrement adapté au pilotage de vannes pour gérer le flux de fluides dans un véhicule automobile, par exemple l'eau, les gaz d'échappement, le liquide de refroidissement, l'huile, le carburant, le liquide de frein, le liquide lave-glace. Il permet en outre une commande en tout ou rien ou proportionnel des vannes.

Le motoréducteur selon l'invention peut être utilisé dans out système requérant un entraînement en rotation, comme par exemple moteur de lève-vitre, dans une pompe, par exemple une pompe à huile, une pompe à eau ... ou toute autre pompe électrique.

## Revendications

1. Motoréducteur comportant un moteur électrique sans balai, un réducteur planétaire (R) et un arbre de sortie (A) solidaire en rotation du réducteur planétaire (R), ledit moteur électrique (M) comportant un stator (8), un rotor (10) disposé dans le stator (8), ledit rotor (10) étant apte à être mis en rotation autour d'un axe longitudinal (X), ledit réducteur (R) étant logé au moins en partie dans le rotor (10), ledit réducteur (R) comportant au moins un premier planétaire (24), au moins un premier satellite (27) engrenant ledit premier planétaire (24), et une couronne dentée extérieure (34) disposée dans le rotor (10) et engrené par le premier satellite (27), le premier planétaire (24) et le premier satellite (27) étant entrainés en rotation par le rotor (10), dans lequel ledit motoréducteur comporte un axe de centrage (38) s'étendant selon l'axe longitudinal (X) et traversant le stator (8) et le rotor (10), l'axe de centrage (38) étant monté directement dans le rotor, l'arbre de sortie et au moins le premier planétaire de sorte à assurer le guidage en rotation du rotor (10), du premier planétaire (24) et du premier satellite (27) et de l'arbre de sortie (A), le rotor étant libre en rotation par rapport à l'axe de centrage (38), le motoréducteur comportant également un carter dans lequel sont logés le moteur électrique (M) et le réducteur planétaire (R), ledit carter comportant une première partie (4) et une seconde partie (6) coopérant l'une avec l'autre de sorte à enfermer le moteur électrique (M) et le réducteur planétaire (R), la seconde partie (6) comportant un passage traversé par l'arbre de sortie, le contour dudit passage guidant l'arbre de sortie, et la première partie (4) comportant un logement non débouchant (41) recevant une extrémité longitudinale (38.1) de l'axe de centrage (38), l'autre extrémité longitudinale de l'axe de centrage (38) étant reçue dans un logement (40) formé dans l'arbre de sortie, le logement (40) de l'arbre de sortie étant non débouchant.

2. Motoréducteur selon la revendication 1, dans lequel l'axe de centrage (38) est monté fixe dans le logement de la première partie (4) du carter.

3. Motoréducteur selon la revendication 2, dans lequel la couronne dentée extérieure (34) est solidaire de la seconde partie (6).

4. Motoréducteur selon la revendication 3, dans lequel la couronne dentée extérieure (34) est d'un seul tenant avec la seconde partie (6).

5. Motoréducteur selon l'une des revendications 1 à 4, dans lequel le premier planétaire (24) est solidaire en rotation d'un moyeu (35) entraîné directement par le rotor (10), et dans lequel le premier satellite (28) est porté par une platine porte-satellite (26) logée dans le rotor (10).

6. Motoréducteur selon la revendication 5, dans lequel le réducteur comporte un deuxième planétaire (28) solidaire en rotation de la première platine porte-satellite (26) et au moins un deuxième satellite (32) relié mécaniquement à l'arbre de sortie (A).

7. Motoréducteur selon la revendication 6, dans lequel le réducteur comporte une deuxième platine porte-satellite (30) portant le deuxième satellite (32) et de laquelle est solidaire en rotation l'arbre de sortie (A).

8. Motoréducteur selon la revendication 7, dans lequel l'axe de centrage (38) traverse également la première platine porte-satellite (26), ladite première platine porte-satellite (26) étant libre en rotation par rapport à l'axe de centrage (38).

9. Motoréducteur selon la revendication 7 ou 8, dans lequel le réducteur comporte trois premiers satellites (28) et trois deuxièmes satellites (32).

10. Motoréducteur selon l'une des revendications 1 à 9, dans lequel la première platine porte-satellite (26) et/ou la deuxième platine porte-satellite (30), le premier planétaire (24) et/ou le deuxième planétaire (28) et/ou le premier satellite (28) et/ou le deuxième satellite (32) et/ou l'arbre de sortie (A) et/ou le carter est ou sont en matériau plastique.

11. Motoréducteur selon l'une des revendications 1 à 10, dans lequel le moteur électrique présente un rapport πD/Np compris entre 4mm et 7,3 mm, D étant le diamètre extérieur de l'aimant du rotor et Np, le nombre de pôles du rotor et dans lequel Np est supérieur à 10.

12. Motoréducteur selon l'une des revendications précédentes, comportant un capteur de position angulaire de l'arbre de sortie comprenant au moins un aimant solidaire en rotation de l'arbre de sortie et des moyens pour détecter le champ magnétique dudit aimant.

13. Système comportant au moins une vanne proportionnelle ou tout ou rien et un motoréducteur selon l'une des revendications 1 à 12 pilotant ladite vanne.

14. Véhicule automobile comportant au moins un motoréducteur selon l'une des revendications 1 à 12 et/ou au moins un système selon la revendication précédente.

## Patentansprüche

1. Getriebemotor, der einen bürstenlosen Elektromotor, ein Planetenuntersetzungsgetriebe (R) und eine Abtriebswelle aufweist, die drehfest mit dem Planetenuntersetzungsgetriebe (R) verbunden ist, wobei der Elektromotor (M) einen Stator (8) und einen im Stator (8) angeordneten Rotor (10) aufweist, wobei der Rotor (10) dazu geeignet ist, um eine Längsachse (X) in Rotation gebracht zu werden, wobei das Untersetzungsgetriebe (R) zumindest teilweise in dem Rotor (10) aufgenommen ist, wobei das Untersetzungsgetriebe (R) mindestens ein erstes Sonnenzahnrad (24), mindestens ein erstes Planetenzahnrad (27), das mit dem ersten Sonnenzahnrand (24) zusammengreift, und einen äußeren Zahnkranz (34) aufweist, das in dem Rotor (10) angeordnet ist und mit dem ersten Planetenzahnrad (27) in Eingriff steht, wobei das erste Sonnenzahnrad (24) und das erste Planetenzahnrad (27) durch den Rotor (10) in Rotation gebracht werden, wobei der Getriebemotor eine Zentrierachse (38) aufweist, die sich entlang der Längsachse (X) erstreckt und den Stator (8) und den Rotor (10) durchquert, wobei die Zentrierachse (38) direkt in dem Rotor, der Abtriebswelle und mindestens dem ersten Sonnenzahnrad montiert ist, um die Drehung des Rotors (10), des ersten Sonnenzahnrads (24) und des ersten Planetenzahnrads (27) und der Abtriebswelle (A) zu führen, wobei der Rotor (10) in Bezug auf die Zentrierachse (38) frei drehbar ist, wobei der Getriebemotor ferner ein Gehäuse aufweist, in dem der Elektromotor (M) und das Planetenuntersetzungsgetriebe (R) aufgenommen sind, wobei das Gehäuse einen ersten Teil (4) und einen zweiten Teil (6) aufweist, die ineinandergreifen, um den Elektromotor (M) und das Planetenuntersetzungsgetriebe (R) zu umschließen, wobei der zweite Teil (6) einen von der Abtriebswelle durchlaufenen Durchgang aufweist, wobei die Kontur des Durchgangs die Abtriebswelle führt, und wobei der erste Teil (4) eine nicht geöffnete Behausung (41) aufweist, die ein Längsende (38.1) der Zentrierachse (38) aufnimmt, wobei das andere Längsende der Zentrierachse (38) in einer in der Abtriebswelle ausgebildeten Behausung (40) aufgenommen ist, wobei die Behausung (40) der Abtriebswelle nicht geöffnet ist.

2. Getriebemotor nach Anspruch 1, wobei die Zentrierachse (38) fest in der Behausung des ersten Teils (4) des Gehäuses montiert ist.

3. Getriebemotor nach Anspruch 2, wobei der äußere Zahnkranz (34) mit dem zweiten Teil (6) verbunden ist.

4. Getriebemotor nach Anspruch 3, wobei der äußere Zahnkranz (34) einstückig mit dem zweiten Teil (6) ausgebildet ist.

5. Getriebemotor nach einem der Ansprüche 1 bis 4, wobei das erste Sonnenzahnrad (24) drehfest mit einer Nabe (35) verbunden ist, die direkt vom Rotor (10) angetrieben wird, und wobei das erste Planetenzahnrad (28) von einer im Rotor (10) aufgenommenen Planetenträgerplatte (26) getragen wird.

6. Getriebemotor nach Anspruch 5, wobei das Untersetzungsgetriebe ein zweites Sonnenzahnrad (28), das drehfest mit der ersten Planetenträgerplatte (26) verbunden ist, und mindestens ein zweites Planetenzahnrad (32) aufweist, das mechanisch mit der Abtriebswelle (A) verbunden ist.

7. Getriebemotor nach Anspruch 6, wobei das Untersetzungsgetriebe eine zweite Planetenträgerplatte (30) aufweist, die das zweite Planetenzahnrad (32) trägt und drehfest mit der Abtriebswelle (A) verbunden ist.

8. Getriebemotor nach Anspruch 7, wobei die Zentrierachse (38) ferner die erste Planetenträgerplatte (26) durchquert, wobei die erste Planetenträgerplatte (26) in Bezug auf die Zentrierachse (38) frei drehbar ist.

9. Getriebemotor nach Anspruch 7 oder 8, wobei das Untersetzungsgetriebe drei erste Planetenzahnräder (28) und drei zweite Planetenzahnräder (32) aufweist.

10. Getriebemotor nach einem der Ansprüche 1 bis 9, wobei die erste Planetenträgerplatte (26) und/oder die zweite Planetenträgerplatte (30), das erste Sonnenzahnrad (24) und/oder das zweite Sonnenzahnrad (28) und/oder das erste Planetenzahnrad (28) und/oder das zweite Planetenzahnrad (32) und/oder die Abtriebswelle (A) und/oder das Gehäuse aus Kunststoff hergestellt ist/sind.

11. Getriebemotor nach einem der Ansprüche 1 bis 10, wobei der Elektromotor ein Verhältnis nD/Np zwischen 4 mm und 7,3 mm aufweist, wobei D der Außendurchmesser des Rotormagneten und Np die Anzahl der Pole des Rotors ist, und wobei Np größer als 10 ist.

12. Getriebemotor nach einem der vorstehenden Ansprüche, der einen Sensor für die Winkelposition der Abtriebswelle aufweist, der mindestens einen mit der Abtriebswelle drehfest verbundenen Magneten und Vorrichtungen zur Erfassung des Magnetfelds des Magneten aufweist.

13. System, das mindestens einen Proportionalventil oder ein Auf-/Zu-Ventil und einen Getriebemotor nach einem der Ansprüche 1 bis 12 aufweist, der das Ventil steuert.

14. Kraftfahrzeug, das mindestens einen Getriebemotor nach einem der Ansprüche 1 bis 12, und/oder mindestens ein System nach dem vorstehenden Anspruch aufweist.

## Claims

1. Gear motor comprising a brushless electric motor, a planetary reduction gear (R) and an output shaft (A) secured in rotation to the planetary reduction gear (R), said electric motor (M) including a stator (8), a rotor (10) disposed in the stator (8), said rotor (10) being suitable for being rotated about a longitudinal axis (X), said reduction gear (R) being housed at least partially in the rotor (10), said reduction gear (R) including at least a first sun gear (24), at least a first planet gear (27) engaging said first sun gear (24), and an external ring gear (34) disposed in the rotor (10) and engaged by the first planet gear (27), the first sun gear (24) and the first planet gear (27) being rotated by the rotor (10), wherein said gear motor includes a centring shaft (38) extending along the longitudinal axis (X) and traversing the stator (8) and the rotor (10), the centring shaft (38) being mounted directly in the rotor, the output shaft and at least the first sun gear so as to guide the rotation of the rotor (10), the first sun gear (24) and the first planet gear (27) and the output shaft (A), the rotor being free to rotate in relation to the centring shaft (38), the gear motor also including a casing wherein the electric motor (M) and the planetary reduction gear (R) are housed, said casing including a first part (4) and a second part (6) engaging with one another so as to confine the electric motor (M) and the planetary reduction gear (R), the second part (6) including a passage traversed by the output shaft, the outline of said passage guiding the output shaft in rotation, and the first part (4) including a non-opening receptacle (41) receiving a longitudinal end (38.1) of the centring shaft (38), the other longitudinal end of the centring shaft (38) being received in a receptacle (40) formed in the output shaft, the receptacle (40) of the output shaft being non-opening.

2. Gear motor according to claim 1, wherein the centring shaft (38) is fixedly mounted in the receptacle of the first part (4) of the casing.

3. Gear motor according to claim 2, wherein the external ring gear (34) is secured to the second part (6).

4. Gear motor according to claim 3, wherein the external ring gear (34) is made of one piece with the second part (6).

5. Gear motor according to one of claims 1 to 4, wherein the first sun gear (24) is secured in rotation to a hub (35) driven directly by the rotor (10), and the first planet gear (28) is borne by a planet gear carrier plate (26) housed in the rotor (10).

6. Gear motor according to claim 5, wherein the reduction gear includes a second sun gear (28) secured in rotation to the first planet gear carrier plate (26) and at least a second planet gear (32) mechanically connected to the output shaft (A).

7. Gear motor according to claim 6, wherein the reduction gear includes a second planet gear carrier plate (30) bearing the second planet gear (32) and to which the output shaft (A) is secured in rotation.

8. Gear motor according to claim 7, wherein the centring shaft (38) also traverses the first planet gear carrier plate (26), said planet gear carrier plate (26) being free to rotate in relation to the centring shaft (38).

9. Gear motor according to claim 7 or 8, wherein the reduction gear includes three first pinion carriers (28) and three second pinion carriers (32).

10. Gear motor according to one of claims 1 to 9, wherein the first planet gear carrier plate (26) and/or the second planet gear carrier plate (30), the first sun gear (24) and/or the second sun gear (28) and/or the first planet gear (28) and/or the second planet gear (32) and/or the output shaft (A) and/or the casing is or are made of plastic.

11. Gear motor according to one of claims 1 to 10, wherein the electric motor has a ratio πD/Np between 4 mm and 7.3 mm, D being the outer diameter of the rotor magnet, and Np, the number of poles of the rotor, and wherein Np is greater than 10.

12. Gear motor according to one of the preceding claims, including an angular output shaft position sensor comprising at least one magnet secured in rotation with the output shaft and means for detecting the magnetic field of said magnet.

13. System including at least one proportional or on/off valve and a gear motor according to one of claims 1 to 12 controlling said valve.

14. Motor vehicle including at least one gear motor according to one of claims 1 to 12 and/or at least one system according to the preceding claim.
